# EUROPEAN PATENT SPECIFICATION

(11) **EP 4 442 100 B1**
(45) Date of publication and mention of the grant of the patent: **08.10.2025**
(21) Application number: 24165768.3
(22) Date of filing: 25.03.2024
(51) Int. Cl.: A01D 34/90, F16F 15/10

(54) **BACKPACK POWER WORKING MACHINE**
RUCKSACKÄHNLICH TRAGBARE ARBEITSMASCHINE
MACHINE DE TRAVAIL PORTABLE DE TYPE SAC À DOS

(30) Priority: 04.04.2023 JP 2023060614
(43) Date of publication of application: 09.10.2024
(73) Proprietor: Yamabiko Corporation, Ohme-shi Tokyo 198-8760 (JP)
(72) Inventor: SATO, Reiji, Tokyo, 198-8760 (JP); KIKUCHI, Satoru, Tokyo, 198-8760 (JP); ARAHATA, Kouji, Tokyo, 198-8760 (JP); OTSUJI, Yuka, Tokyo, 198-8760 (JP)
(74) Representative: Schrell, Andreas

(56) References cited:
- JP-A- 2014 161 269
- JP-A- H07 312 944
- JP-B2- 3 954 824
- US-A- 4 899 446
- US-B2- 10 772 258

## Description

### Technical Field

The present invention relates to a backpack power working machine, such as a brush cutter, a hedge trimmer, and the like. More particularly, the present invention relates to a backpack power working machine in which a drive source is mounted on a backpack mount configured to be carried on the back of an operator, and a one-way clutch is disposed in a rotation transmission mechanism that transmits the rotation of an output shaft of the drive source to an operating unit, such as a cutting blade, provided at the front end of an operating rod.

### Background Art

A backpack brush cutter that is one example of the backpack power working machine includes a backpack mount (also referred to as a backpack frame) having a backrest and shoulder straps and configured to be carried on the back of an operator, and on the backpack mount, an internal combustion engine (a small air-cooled two- or four-stroke cycle gasoline engine) provided with a centrifugal clutch with a recoil starter and a fuel tank as a drive source. An output shaft of the internal combustion engine connects to an operating rod provided with, for example, a grip, an on-off switch, a throttle lever, a handle for moving a cutting blade operating unit from side to side, and the like, via a flexible shaft covered with a flexible tube. The front end of the operating rod is provided with the cutting blade operating unit including a gear case (bevel gear unit), a circular saw cutting blade provided rotatably about a rotating shaft, a safety cover (also referred to as a protection cover), and the like. The cutting blade is driven to rotate by the internal combustion engine via a drive shaft (also referred to as a transmission shaft) inserted into the operating rod and the gear case (see Patent Literature 1, for example).

In the backpack brush cutter with such a configuration, due to the fluctuation of combustion of the internal combustion engine, changes in torque and angular speed occur in adjusting the speed of the rotation of the internal combustion engine. Therefore, a relative difference in the rotation is generated between the internal combustion engine and the cutting blade attached to the tip of the elongated drive shaft, thus generating torsional vibration in the operating rod. In particular, in recent years, the torsional vibration in the operating rod is more likely to occur since internal combustion engines have been operating under lean-burn conditions to meet the emission standards and the torque fluctuations have increased accordingly as compared to the conventional engines.

As one of vibration-proof measures to suppress the torsional vibration, the following Patent Literature 2 to 4 suggest that a one-way clutch is disposed in a transmission system from a clutch drum to a rotary blade shaft (a rotating shaft of a cutting edge) so as to transmit the rotation only in a normal rotational direction with respect to the rotational direction of the drive shaft. JP 2014 161269 discloses a backpack power working machine.

### Citation List

### Patent Literature

Patent Literature 1: JP 3566030 B
Patent Literature 2: JP S52-131423 U
Patent Literature 3: JP 3954824 B
Patent Literature 4: US 10772258 B

### Summary of Invention

### Technical Problem

However, the conventional techniques described in Patent Literature 2, 3, and 4 assemble the one-way clutch into the clutch drum of the shoulder-type brush cutter, and when this technique is similarly applied to a backpack brush cutter, the projection amount of the connecting portion between the clutch drum of the internal combustion engine mounted on the backpack mount and the flexible shaft will increase. The greater the projection amount of this connecting portion, the lower the operability due to limitation in the rotational range of the drive source portion (see Fig. 3 of Patent Literature 1). To avoid deterioration of the operability, the drive source portion may be located separately from the backpack mount to ensure its rotational range. However, such arrangement may cause the operator carrying the backpack brush cutter to feel an increase in weight. In addition, a special connecting structure for assembling the one-way clutch into the clutch drum portion of the internal combustion engine requires customization of engine components, and may cause cost increase or may inhibit sharing of the components.

In addition, Patent Literature 2 also suggests that the main shaft of the shoulder-type brush cutter is divided, and the one-way clutch is assembled into its division joint (coupling portion). In this technique, a support member is provided between the main shaft and the pipe to support the shaft intermediate portion, and the one-way clutch is interposed between the solid shafts. However, when this technique is similarly applied between the solid shaft (drive shaft) and the flexible shaft of the backpack brush cutter, the flexible shaft may be bent and sway in a radial direction, and axial misalignment may occur between the drive shaft and the flexible shaft. This may increase the resistance in the coupling portion, and inhibit the rotation transmission or cause a durability problem or the like. This means that, in the coupling portion described in Patent Literature 2, there is no consideration of movement or bending of the flexible shaft caused by the rotation of the drive source on the backpack mount, or its resulting impact on the coupling portion.

The present invention has been made in view of the foregoing, and it is an object of the present invention to provide a backpack power working machine with which an operator performs operation while carrying on his/her back a backpack mount with a drive source mounted thereon. The backpack power working machine is capable of effectively suppressing torsional vibration in an operating rod generated in adjusting speed.

### Solution to Problem

To achieve the above object, the backpack power working machine according to the present invention basically includes: a backpack mount (2) configured to be carried on a back of an operator; a drive source (3) mounted on the backpack mount (2); and an operating rod (6) having a drive shaft (60) inserted thereinto, and provided at its front end with an operating unit (7) driven by the drive shaft (60), the operating rod (6) being connected to an output shaft of the drive source (3) via a flexible shaft (40), the output shaft of the drive source (3) and the operating unit (7) being configured to be coupled together when they are driven by a rotation transmission mechanism including the flexible shaft (40) and the drive shaft (60), and rotation of the output shaft of the drive source (3) being transmitted to the operating unit (7) via the rotation transmission mechanism. **In** the backpack power working machine, a one-way clutch assembly (8) including a shaft coupling (80), a pipe coupling (88), and a ball bearing (98) is provided. The shaft coupling (80) includes a coupling body (82) positioned between the flexible shaft (40) and the drive shaft (60) to couple them together when they are driven, and a one-way clutch (87) interposed between the coupling body (82) and the drive shaft (60) to prevent generation of torsional vibration in the operating rod (6). The pipe coupling (88) is disposed outside of the shaft coupling (80) and couples together a flexible tube (48) covering the flexible shaft (40) and a main pipe (68) covering the drive shaft (60). The ball bearing (98) is interposed between the shaft coupling (80) and the pipe coupling (88) and supports an intermediate portion of the coupling body (82) inside of the pipe coupling (88).

In a preferred aspect, the pipe coupling (88) is configured as a single component.

In a further preferred aspect, the ball bearing (98) supports at least a solid portion of the coupling body (82) between a connecting portion (84) on a first end side that connects to the flexible shaft (40) and a connecting portion (86) on a second end side that connects to the drive shaft (60).

In a still further preferred aspect, the ball bearing (98) supports at least an outer peripheral portion of the connecting portion (84) that connects to the flexible shaft (40) in the coupling body (82).

In a yet further preferred aspect, the ball bearing (98) includes a plurality of ball bearings (98) arranged side by side in a central axis (O) direction of the coupling body (82).

In a yet further preferred aspect, the coupling body (82) of the shaft coupling (80) is engaged with an inner peripheral portion of the ball bearing (98).

In a yet further preferred aspect, a first end portion (82R) of the coupling body (82) of the shaft coupling (80) has a diameter smaller than an inside diameter of the ball bearing (98), and a second end portion (82F) of the coupling body (82) of the shaft coupling (80) has a diameter larger than the inside diameter of the ball bearing (98), and a stepped portion (85) configured to be engaged with an inner peripheral portion of the ball bearing (98) is formed between the first end portion (82R) and the second end portion (82F) of the coupling body (82) of the shaft coupling (80).

**In** a yet further preferred aspect, the ball bearing (98) and the shaft coupling (80) are inserted into the pipe coupling (88) only from one direction along a central axis (O) of the pipe coupling (88) and are disposed inside of the pipe coupling (88).

**In** a yet further preferred aspect, a grip (62) or a handle (66) to be held by an operator is provided closer to a front end than the shaft coupling (80) including the one-way clutch (87) is.

### Advantageous Effects of Invention

According to the present invention, in the shaft coupling (80) of the one-way clutch assembly (8) provided in the connecting portion between the flexible shaft (40) and the drive shaft (60) in the rotation transmission mechanism, with the one-way clutch (87) interposed between the coupling body (82) and the drive shaft (60), the torsional vibration in the operating rod (6) can be effectively suppressed. **In** addition, since the coupling body (82) provided with the one-way clutch (87) is supported by the ball bearing (98) inside of the pipe coupling (88), even when the flexible shaft (40) is bent and sways in the radial direction and axial misalignment occurs between the drive shaft (60) and the flexible shaft (40), it is possible to suppress an increase in resistance in the coupling portion, to smoothly transmit rotation, and to improve the durability and the like. As a result, in the backpack power working machine (1) with which the operator performs operation while carrying on his/her back the backpack mount with the drive source mounted thereon, the torsional vibration in the operating rod (6) generated in adjusting speed can be effectively suppressed.

### Brief Description of Drawings

Fig. 1 is an external perspective view of a backpack brush cutter that is one example of a backpack power working machine according to one embodiment of the present invention.
Fig. 2 is an external perspective view of an operating rod portion of the backpack brush cutter shown in Fig. 1.
Fig. 3 is a vertical cross-sectional view around a one-way clutch assembly of a connecting portion between a drive shaft and a flexible shaft of the backpack brush cutter shown in Fig. 1.
Fig. 4 is a perspective view of the one-way clutch assembly of the backpack brush cutter shown in Fig. 1, where a connector cover is removed.
Fig. 5 is a horizontal cross-sectional view of the one-way clutch assembly shown in Fig. 4.

### Description of Embodiments

Hereinafter, an embodiment of the present invention will be described with reference to the drawings.

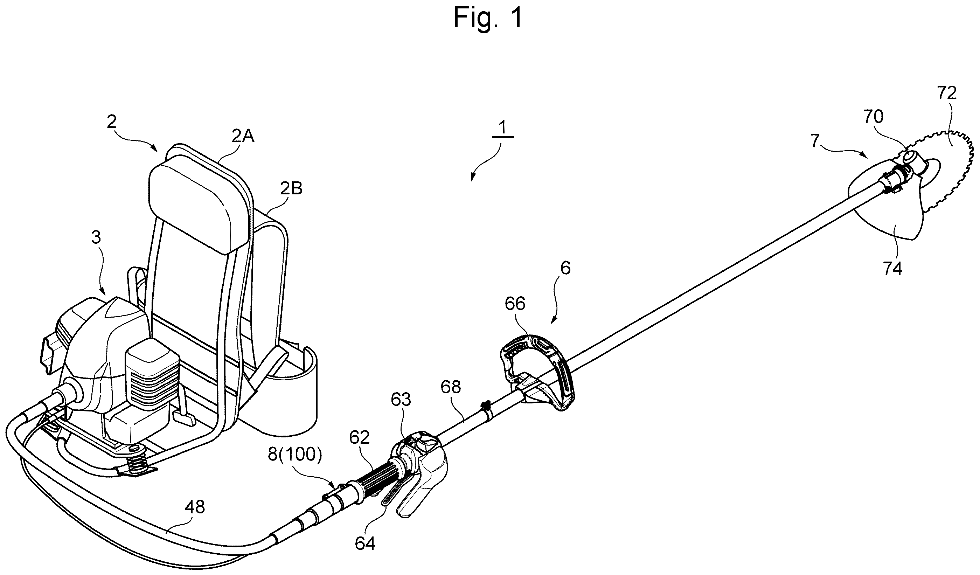

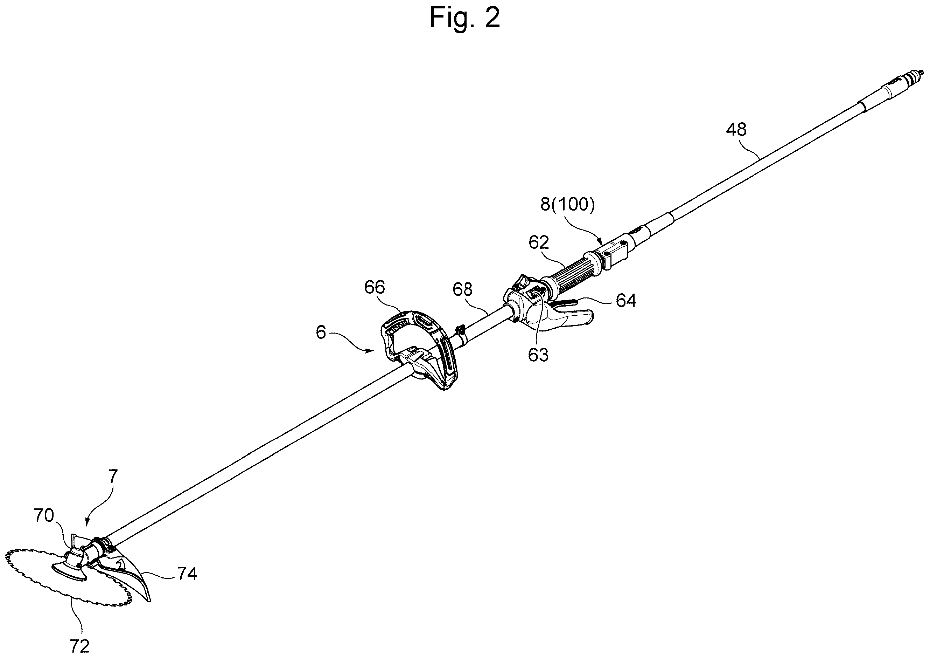

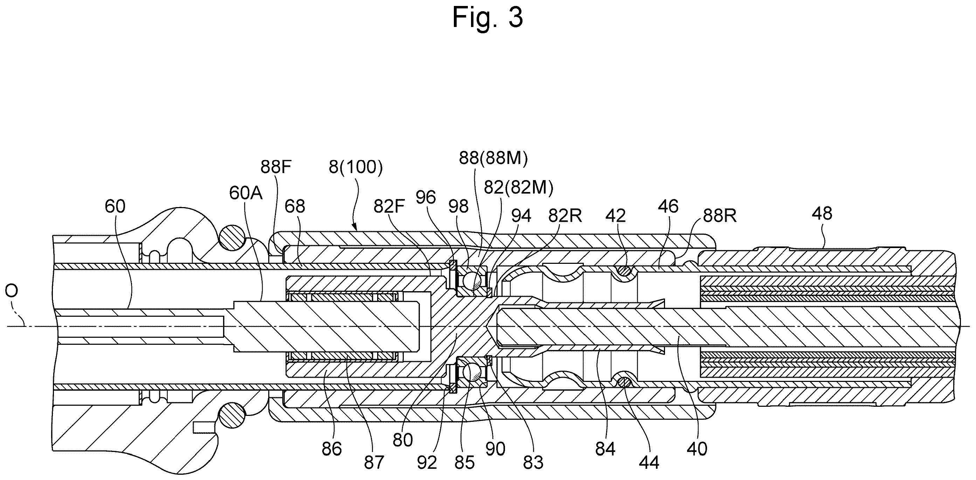

Fig. 1 is an external perspective view of a backpack brush cutter that is one example of a backpack power working machine according to one embodiment of the present invention. Fig. 2 is an external perspective view of an operating rod portion of the backpack brush cutter shown in Fig. 1. Fig. 3 is a vertical cross-sectional view around a one-way clutch assembly of a connecting portion between a drive shaft and a flexible shaft of the backpack brush cutter shown in Fig. 1.

### (Overall Configuration)

A backpack brush cutter 1 of the illustrated embodiment includes a backpack mount (backpack frame) 2 having a backrest 2A and shoulder straps 2B and configured to be carried on the back of the operator, and on the backpack mount 2, an internal combustion engine (a small air-cooled two- or four-stroke cycle gasoline engine) 3 provided with a centrifugal clutch with a recoil starter and a fuel tank as a drive source. An output shaft of the internal combustion engine 3 connects to an operating rod 6 via a flexible shaft 40 (Fig. 3) covered with a flexible tube 48. **In** other words, the internal combustion engine 3 and the rear end of the operating rod 6 are coupled together by the flexible shaft 40 (Fig. 3) covered with the flexible tube 48.

The flexible shaft 40 (and the flexible tube 48) has flexibility, and is connected at its one end to the output shaft of the internal combustion engine 3, and is connected at its other end (via a one-way clutch assembly 8, which will be described later) to the rear end of the operating rod 6 (or a drive shaft 60 thereof).

The front end of the operating rod 6 is provided with a cutting blade operating unit 7 including a gear case (bevel gear unit) 70, a circular saw cutting blade 72 provided rotatably about a rotating shaft, a safety cover (protection cover) 74, and the like. The cutting blade 72 is driven to rotate by the drive shaft 60 (Fig. 3) inserted into the operating rod 6 (or a main pipe 68 thereof) and the gear case 70.

The operating rod 6 includes, at around its rear end, a grip 62, and an on-off switch 63 and a throttle lever 64 adjacent to the grip 62. The operating rod 6 also includes an annular handle 66 for moving the cutting blade operating unit 7 from side to side at a position slightly closer to the front end than the position of the grip 62 and the like. The grip 62 and the handle 66 to be held by the operator are provided closer to the front end than a shaft coupling 80 with a one-way clutch 87 is (described later) (Fig. 3).

**In** addition, the one-way clutch assembly 8 incorporating the one-way clutch 87 (Fig. 3) to prevent generation of torsional vibration in the operating rod 6 is disposed in a rotation transmission mechanism that transmits rotation from the output shaft of the internal combustion engine 3 to the cutting blade 72 provided at the front end of the operating rod 6 and rotating about the rotating shaft.

The flexible shaft 40 positioned between the internal combustion engine 3 and the rear end of the operating rod 6, and the drive shaft 60 made of steel inserted into the operating rod 6 (or the main pipe 68 thereof) are positioned between the output shaft of the internal combustion engine 3 and the rotating shaft of the cutting blade 72, and couple them together when they are driven. More specifically, the rear end of the flexible shaft 40 is coupled to the output shaft of the internal combustion engine 3 via the centrifugal clutch when they are driven, and the front end of the drive shaft 60 is coupled to the rotating shaft of the cutting blade 72 via the gear case 70 and the like when they are driven. That is, the rotation transmission mechanism that transmits rotation from the output shaft of the internal combustion engine 3 to the cutting blade 72 rotating about the rotating shaft is composed of the flexible shaft 40, the drive shaft 60, and the like. The rotation of the output shaft of the internal combustion engine 3 is transmitted to the rotating shaft of the cutting blade 72 via the rotation transmission mechanism.

**In** the present embodiment, the one-way clutch assembly 8 including the one-way clutch 87 for preventing torsional vibration is interposed between (connecting portion) the flexible shaft 40 (the front end thereof) and the drive shaft 60 (the rear end thereof).

### (One-way Clutch Assembly 8)

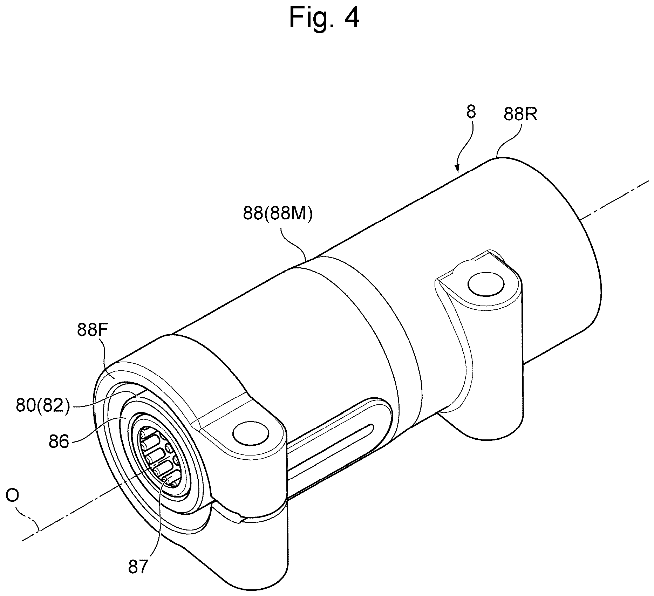

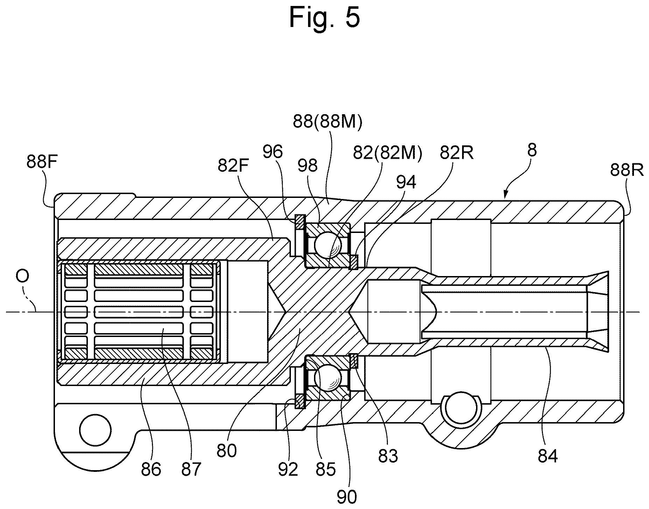

The one-way clutch assembly 8 of the present embodiment basically includes, as can be clearly seen in Fig. 4 and Fig. 5 in conjunction with Fig. 2 and Fig. 3, a shaft coupling 80 including a coupling body 82 incorporating the one-way clutch 87, a pipe coupling 88, a ball bearing 98, and a connector cover 100 covering them.

### (Shaft Coupling 80)

The coupling body 82 of the shaft coupling 80 is configured as a stepped axial single component (i.e., integrally formed component) made of a metal material such as steel, for example. The coupling body 82 is positioned between the flexible shaft 40 (the front end thereof) and the drive shaft 60 (the rear end thereof), and couples them together when they are driven.

More specifically, a rear end portion 82R of the coupling body 82 is integrally formed with a connecting portion 84 on the rear end side (hereinafter simply referred to as a connecting portion) having a recessed hole extending in a central axis O direction and opening toward the flexible shaft 40 on the rear side (having a bottomed cylindrical shape laid on its side). This connecting portion 84 is externally mounted on the flexible shaft 40 and extends to the inside of the flexible tube 48 (or a connecting pipe 46 thereof) connected to a rear opening 88R of the pipe coupling 88. The front end of the flexible shaft 40 is inserted into this connecting portion 84 by press-fitting, for example, and is coupled thereto so as to be integrally rotatable (unable to rotate relatively to each other).

The rear end portion 82R (connecting portion 84) of the coupling body 82 has an outside diameter substantially equal to or slightly smaller than the inside diameter of the ball bearing 98.

Meanwhile, a front end portion 82F of the coupling body 82 is integrally formed with a connecting portion 86 on the front end side (hereinafter simply referred to as a connecting portion) having a recessed hole extending in the central axis O direction and opening toward the drive shaft 60 on the front side (having a bottomed cylindrical shape laid on its side). This connecting portion 86 is externally mounted on the drive shaft 60 and extends to the inside of the main pipe 68 connected to a front opening 88F of the pipe coupling 88. The cylindrical one-way clutch 87 is press-fitted to this connecting portion 86, and the rear end of the drive shaft 60 (or a large-diameter portion 60A thereof) is integrally (with no clearance) inserted into the inside of the one-way clutch 87 by press-fitting, for example. That is, the cylindrical one-way clutch 87 is fit-inserted and disposed, with no clearance, between the connecting portion 86 (the inner periphery thereof) and the rear end of the drive shaft 60 (or the large-diameter portion 60A thereof) with a cylindrical cross section inserted (received) into the connecting portion 86.

Although description of a detailed structure of the one-way clutch 87 will be omitted, the one-way clutch 87 transmits the rotation only in a normal rotational direction with respect to the rotational direction of the inserted drive shaft 60. That is, with the one-way clutch 87 incorporated in the coupling body 82, the rotation in the normal rotational direction of the output shaft of the internal combustion engine 3 is transmitted to the drive shaft 60 (via the flexible shaft 40), whereas the rotation in the opposite direction will not be transmitted to the drive shaft 60.

The front end portion 82F (connecting portion 86) of the coupling body 82 has an outside diameter larger than the inside diameter of the ball bearing 98. That is, the connecting portion 86 provided in the front end portion 82F has a diameter larger than that of the connecting portion 84 provided in the aforementioned rear end portion 82R.

A center portion 82M of the coupling body 82 between the rear end portion 82R and the front end portion 82F is a solid portion between the connecting portion 84 and the connecting portion 86 (each having a bottomed cylindrical shape laid on its side). The center portion 82M has an outside diameter substantially equal to the inside diameter of the ball bearing 98, and the ball bearing 98 is securely and externally mounted on the center portion 82M (solid portion).

### (Pipe Coupling 88)

The pipe coupling 88 is configured as a hollow cylindrical single component (i.e., integrally formed component) made of a metal material such as steel, for example. The pipe coupling 88 has a length in the central axis O direction that is slightly larger than the length of the shaft coupling 80 in the central axis O direction, and is disposed outside of the shaft coupling 80 so as to be coaxial with the shaft coupling 80. The pipe coupling 88 houses therein the shaft coupling 80 as described above, and couples together the flexible tube 48 covering the flexible shaft 40 and the main pipe 68 covering the drive shaft 60.

Specifically, a substantially cylindrical connecting pipe 46 made of a metal material such as steel, for example, is provided at the front end (opening) of the flexible tube 48. This connecting pipe 46 is inserted into and connected to the front end (opening) of the flexible tube 48 by press-fitting, for example, such that its end portion projects from the flexible tube 48.

The connecting pipe 46 of the flexible tube 48 is inserted into and connected (coupled) to the rear opening 88R of the pipe coupling 88 (until its end portion is located near the center of the pipe coupling 88) by press-fitting, for example. That is, the rear opening 88R of the pipe coupling 88 serves as a rear end connecting portion where it connects to the connecting pipe 46 of the flexible tube 48. In addition, an O ring 42 as a seal member for sealing between the pipe coupling 88 (the inner periphery thereof) and the connecting pipe 46 (the outer periphery thereof) is attached to an annular recess 44 formed on the outer periphery of the connecting pipe 46 of the flexible tube 48.

Meanwhile, the rear end of the main pipe 68 made of a metal material such as steel, for example, is inserted into and connected (coupled) to the front opening 88F of the pipe coupling 88 (such that the rear end of the main pipe 68 abuts on a C ring 96 attached to the inner periphery of the pipe coupling 88 at around the center) by press-fitting, for example. That is, the front opening 88F of the pipe coupling 88 serves as a front end connecting portion where it connects to the rear end of the main pipe 68.

The ball bearing 98 is securely and internally mounted in a center portion 88M (in the central axis O direction) of the pipe coupling 88 (between the inserted connecting pipe 46 and main pipe 68).

### (Ball Bearing 98)

The ball bearing 98 is interposed between the shaft coupling 80 and the pipe coupling 88, and supports the intermediate portion of the coupling body 82 of the shaft coupling 80 inside of the pipe coupling 88.

Specifically, the ball bearing 98 is interposed between the center portion 82M (the outer periphery thereof) of the coupling body 82 of the shaft coupling 80 and the center portion 88M (the inner periphery thereof) of the pipe coupling 88. The inner peripheral portion of the ball bearing 98 is pressed and held by an annular stepped portion 85 formed near the front end of the center portion 82M (i.e., between the center portion 82M and the front end portion 82F) and a C ring 94 as a pressing member fitted to an annular outer peripheral groove 83 formed near the rear end of the center portion 82M (i.e., between the center portion 82M and the rear end portion 82R), and the outer peripheral portion of the ball bearing 98 is pressed and held by an annular engagement projection 90 provided near the rear end of the center portion 88M and a C ring 96 as a pressing member fitted to an annular inner peripheral groove 92 formed near the front end of the center portion 88M. In this state, the ball bearing 98 is interposed between the center portion 82M (the outer periphery thereof) of the coupling body 82 of the shaft coupling 80 and the center portion 88M (the inner periphery thereof) of the pipe coupling 88. With the ball bearing 98, the shaft coupling 80 is rotatably supported about the central axis O inside of the pipe coupling 88.

### (Connector Cover 100)

The connector cover 100 (Fig. 1 to Fig. 3) is configured as a cylinder made of synthetic rubber, for example. The connector cover 100 covers the outer periphery of the pipe coupling 88 in which the shaft coupling 80 and the ball bearing 98 are internally mounted.

### (Methods of Assembling One-way Clutch Assembly 8)

As one example of the methods of assembling the one-way clutch assembly 8 with the above-described configuration, the ball bearing 98 is inserted into the inside of the pipe coupling 88 from the front end toward the rear end of the pipe coupling 88 until its outer peripheral portion engages the engagement projection 90 protruded from the inner periphery of the pipe coupling 88. Then, with the outer peripheral portion of the ball bearing 98 engaged with the engagement projection 90, the C ring 96 is fitted into the inner peripheral groove 92 provided on the inner periphery of the pipe coupling 88 (from the front end of the pipe coupling 88). Accordingly, the ball bearing 98 is positioned and disposed on the inner periphery of the pipe coupling 88 with its outer peripheral portion sandwiched between the engagement projection 90 and the C ring 96.

After that, the shaft coupling 80 is inserted into the inside of the pipe coupling 88 from the front end toward the rear end of the pipe coupling 88 until the rear end portion 82R and the center portion 82M of the coupling body 82 of the shaft coupling 80 are inserted into the inside of the ball bearing 98 and also the stepped portion 85 (between the center portion 82M and the front end portion 82F) of the coupling body 82 of the shaft coupling 80 engages the inner peripheral portion of the ball bearing 98. Then, with the stepped portion 85 engaged with the inner peripheral portion of the ball bearing 98, the C ring 94 is fitted into the outer peripheral groove 83 provided on the outer periphery of the coupling body 82 (from the rear end of the pipe coupling 88). Accordingly, the ball bearing 98 is positioned and disposed on the outer periphery of the coupling body 82 of the shaft coupling 80 with its inner peripheral portion sandwiched between the stepped portion 85 and the C ring 94. That is, the ball bearing 98 is interposed between the coupling body 82 (the outer periphery thereof) of the shaft coupling 80 and the pipe coupling 88 (the inner periphery thereof).

Then, the connector cover 100 is externally mounted on the pipe coupling 88 in which the ball bearing 98 and the shaft coupling 80 are internally mounted (in a direction from the front end toward the rear end along the central axis O of the pipe coupling 88) as described above.

As another example of the methods of assembling the one-way clutch assembly 8, the rear end portion 82R and the center portion 82M of the coupling body 82 of the shaft coupling 80 are inserted into the inside of the ball bearing 98 and also the stepped portion 85 (between the center portion 82M and the front end portion 82F) of the coupling body 82 of the shaft coupling 80 is engaged with the inner peripheral portion of the ball bearing 98. Then, with the stepped portion 85 engaged with the inner peripheral portion of the ball bearing 98, the C ring 94 is fitted into the outer peripheral groove 83 provided on the outer periphery of the coupling body 82. Accordingly, the ball bearing 98 is positioned and disposed on the outer periphery of the coupling body 82 of the shaft coupling 80 with its inner peripheral portion sandwiched between the stepped portion 85 and the C ring 94.

After that, the shaft coupling 80 with the ball bearing 98 is inserted into the inside of the pipe coupling 88 from the front end toward the rear end of the pipe coupling 88 until the outer peripheral portion of the ball bearing 98 engages the engagement projection 90 protruded from the inner periphery of the pipe coupling 88. Then, with the outer peripheral portion of the ball bearing 98 engaged with the engagement projection 90, the C ring 96 is fitted into the inner peripheral groove 92 provided on the inner periphery of the pipe coupling 88 (from the front end of the pipe coupling 88). Accordingly, the ball bearing 98 is positioned and disposed on the inner periphery of the pipe coupling 88 with its outer peripheral portion sandwiched between the engagement projection 90 and the C ring 96. That is, the ball bearing 98 is interposed between the coupling body 82 (the outer periphery thereof) of the shaft coupling 80 and the pipe coupling 88 (the inner periphery thereof).

Then, the connector cover 100 is externally mounted on the pipe coupling 88 in which the shaft coupling 80 with the ball bearing 98 is internally mounted (in a direction from the front end toward the rear end along the central axis O of the pipe coupling 88) as described above.

### (Operational effects)

The backpack brush cutter 1 with the aforementioned configuration operates as follows.

Specifically, when the internal combustion engine 3 starts operation, the output shaft of the internal combustion engine 3 rotates and its rotation is transmitted to the flexible shaft 40, then the rotation of the flexible shaft 40 is transmitted to the drive shaft 60 via the one-way clutch 87 of the one-way clutch assembly 8, and the rotation of the drive shaft 60 is transmitted to the cutting blade 72 via the gear case 70 and the rotating shaft, so that the cutting blade 72 is driven to rotate.

Meanwhile, due to the fluctuation of combustion of the internal combustion engine 3, changes in torque and angular speed occur in the rotation of the internal combustion engine 3, but a relative difference in the rotation between the internal combustion engine 3 and the cutting blade 72 attached to the tip of the elongated drive shaft 60 (of the operating rod 6) is absorbed by the one-way clutch 87 provided at the rear end of the drive shaft 60, so that the difference in the rotation is not transmitted through the rotation transmission mechanism.

That is, in the backpack brush cutter 1 of the present embodiment, the rotation of the output shaft of the internal combustion engine 3 is transmitted to the drive shaft 60 via the one-way clutch 87 of the one-way clutch assembly 8, and the torsional vibration of the drive shaft 60 (the operating rod 6) is absorbed by the one-way clutch 87. Further, in that case, the shaft coupling 80 incorporating the one-way clutch 87 that rotates within the pipe coupling 88 is rotatably supported by the ball bearing 98 provided on the intermediate portion of the coupling body 82 of the shaft coupling 80.

In the aforementioned manner, in the backpack brush cutter 1 of the present embodiment, in the shaft coupling 80 of the one-way clutch assembly 8 provided in the connecting portion between the flexible shaft 40 and the drive shaft 60 in the rotation transmission mechanism, with the one-way clutch 87 interposed between the coupling body 82 and the drive shaft 60, the torsional vibration in the operating rod 6 can be effectively suppressed. In addition, since the coupling body 82 provided with the one-way clutch 87 is supported by the ball bearing 98 inside of the pipe coupling 88, even when the flexible shaft 40 is bent and sways in the radial direction and axial misalignment occurs between the drive shaft 60 and the flexible shaft 40, it is possible to suppress an increase in resistance in the coupling portion, to smoothly transmit rotation, and to improve the durability and the like. As a result, in the backpack power working machine 1 with which the operator performs operation while carrying on his/her back the backpack mount with the drive source mounted thereon, the torsional vibration in the operating rod 6 generated in adjusting speed can be effectively suppressed. Further, since the grip 62 and the handle 66 are provided closer to the front end than the shaft coupling 80 is, excessive vibration will not be transmitted to the grip portion, and the operator can perform operation more comfortably.

It should be noted that it is needless to mention that in the one-way clutch assembly 8, the connection configuration between the shaft coupling 80 and the flexible shaft 40 or drive shaft 60 and the connection configuration between the pipe coupling 88 and the flexible tube 48 or main pipe 68 are not limited to the aforementioned examples. For example, although the shaft coupling 80 (or the coupling body 82 thereof) couples together the bendable flexible shaft 40 and the unbendable drive shaft 60 (as a solid shaft) in the present example, flexible shafts may be coupled together. Further, although the pipe coupling 88 is configured as a component separate from the flexible tube 48 (or the connecting pipe 46 thereof) and the main pipe 68 in the present example, the pipe coupling 88 may be integrally formed with at least one of the flexible tube 48 (or the connecting pipe 46 thereof) or the main pipe 68 (as a single component).

**In** addition, the layout configuration of the ball bearing 98 is not limited to the aforementioned example. For example, although the ball bearing 98 is disposed on the outer periphery of the center portion 82M (solid portion) of the coupling body 82 of the shaft coupling 80 (i.e., the ball bearing 98 supports the center portion 82M (solid portion) of the coupling body 82 of the shaft coupling 80) in the present example, the ball bearing 98 may be disposed on the outer periphery of the connecting portion 84 (the portion to which the front end of the flexible shaft 40 having flexibility and swaying in the radial direction is inserted and connected) provided in the rear end portion 82R of the coupling body 82 of the shaft coupling 80 (i.e., the ball bearing 98 may support the outer peripheral portion of the connecting portion 84). In addition, although only one ball bearing 98 is used in the central axis O direction of the coupling body 82 in the present example, a plurality of ball bearings 98 may be arranged side by side in the central axis O direction of the coupling body 82.

Furthermore, the drive source mounted on the backpack mount 2 for driving the cutting blade operating unit (operating unit) 7 provided at the front end of the operating rod 6 is not limited to the internal combustion engine 3, and may be an electric motor or the like.

### Reference Signs List

- 1: Backpack brush cutter (backpack power working machine)
- 2: Backpack mount
- 2A: Backrest
- 2B: Shoulder straps
- 3: Internal combustion engine (drive source)
- 40: Flexible shaft
- 42: O ring
- 44: Annular recess
- 46: Connecting pipe
- 48: Flexible tube
- 6: Operating rod
- 60: Drive shaft
- 60A: Large-diameter portion
- 62: Grip
- 63: On-off switch
- 64: Throttle lever
- 66: Handle
- 68: Main pipe
- 7: Cutting blade operating unit (operating unit)
- 70: Gear case (bevel gear unit)
- 72: Cutting blade
- 74: Safety cover (protection cover)
- 8: One-way clutch assembly
- 80: Shaft coupling
- 82: Coupling body
- 82F: Front end portion (second end portion) of coupling body
- 82M: Center portion of coupling body
- 82R: Rear end portion (first end portion) of coupling body
- 83: Outer peripheral groove
- 84: Connecting portion on rear end side (connecting portion on first end side)
- 85: Stepped portion
- 86: Connecting portion on front end side (connecting portion on second end side)
- 87: One-way clutch
- 88: Pipe coupling
- 88F: Front opening of pipe coupling
- 88M: Center portion of pipe coupling
- 88R: Rear opening of pipe coupling
- 90: Engagement projection
- 92: Inner peripheral groove
- 94: C ring (pressing member)
- 96: C ring (pressing member)
- 98: Ball bearing
- 100: Connector cover
- O: Central axis

## Claims

1. A backpack power working machine (1), comprising:
a backpack mount (2) configured to be carried on a back of an operator;
a drive source (3) mounted on the backpack mount (2); and
an operating rod (6) having a drive shaft (60) inserted thereinto, and provided at its front end with an operating unit (7) driven by the drive shaft (60), the operating rod (6) being connected to an output shaft of the drive source (3) via a flexible shaft (40),
the output shaft of the drive source (3) and the operating unit (7) being configured to be coupled together when they are driven by a rotation transmission mechanism including the flexible shaft (40) and the drive shaft (60), and rotation of the output shaft of the drive source (3) being transmitted to the operating unit (7) via the rotation transmission mechanism,
**characterised in that** a one-way clutch assembly (8) including a shaft coupling (80), a pipe coupling (88), and a ball bearing (98) is provided,
wherein the shaft coupling (80) includes a coupling body (82) positioned between the flexible shaft (40) and the drive shaft (60) to couple them together when they are driven, and a one-way clutch (87) interposed between the coupling body (82) and the drive shaft (60) to prevent generation of torsional vibration in the operating rod (6),
wherein the pipe coupling (88) is disposed outside of the shaft coupling (80) and couples together a flexible tube (48) covering the flexible shaft (40) and a main pipe (68) covering the drive shaft (60), and
wherein the ball bearing (98) is interposed between the shaft coupling (80) and the pipe coupling (88) and supports an intermediate portion of the coupling body (82) inside of the pipe coupling (88).

2. The backpack power working machine (1) according to claim 1, wherein the pipe coupling (88) is configured as a single component.

3. The backpack power working machine (1) according to claim 1, wherein the ball bearing (98) supports at least a solid portion of the coupling body (82) between a connecting portion (84) on a first end side that connects to the flexible shaft (40) and a connecting portion (86) on a second end side that connects to the drive shaft (60).

4. The backpack power working machine (1) according to claim 1, wherein the ball bearing (98) supports at least an outer peripheral portion of the connecting portion (84) that connects to the flexible shaft (40) in the coupling body (82).

5. The backpack power working machine (1) according to claim 1, wherein the ball bearing (98) includes a plurality of ball bearings (98) arranged side by side in a central axis (O) direction of the coupling body (82).

6. The backpack power working machine (1) according to claim 1, wherein the coupling body (82) of the shaft coupling (80) is engaged with an inner peripheral portion of the ball bearing (98).

7. The backpack power working machine (1) according to claim 1,
wherein a first end portion (82R) of the coupling body (82) of the shaft coupling (80) has a diameter smaller than an inside diameter of the ball bearing (98), and a second end portion (82F) of the coupling body (82) of the shaft coupling (80) has a diameter larger than the inside diameter of the ball bearing (98), and
wherein a stepped portion (85) configured to be engaged with an inner peripheral portion of the ball bearing (98) is formed between the first end portion (82R) and the second end portion (82F) of the coupling body (82) of the shaft coupling (80).

8. The backpack power working machine (1) according to claim 1, wherein the ball bearing (98) and the shaft coupling (80) are inserted into the pipe coupling (88) only from one direction along a central axis (O) of the pipe coupling (88) and are disposed inside of the pipe coupling (88).

9. The backpack power working machine (1) according to claim 1, wherein a grip (62) or a handle (66) to be held by an operator is provided closer to a front end than the shaft coupling (80) including the one-way clutch (87) is.

## Patentansprüche

1. Rucksackähnlich tragbare Arbeitsmaschine (1), umfassend:
eine Rucksackhalterung (2), ausgebildet, um auf dem Rücken eines Anwenders getragen zu werden;
eine an der Rucksackhalterung (2) angebrachte Antriebsquelle (3); und
eine Betätigungsstange (6) aufweisend eine in diese eingeführte Antriebswelle (60) und an ihrem vorderen Ende bereitgestellt mit einer von der Antriebswelle (60) angetriebenen Betätigungseinheit (7), wobei die Betätigungsstange (6) mit einer Abtriebswelle der Antriebsquelle (3) mittels einer flexiblen Welle (40) verbunden ist,
wobei die Abtriebswelle der Antriebsquelle (3) und die Betätigungseinheit (7) ausgebildet sind, um miteinander gekuppelt zu werden, wenn sie durch einen Rotationsübertragungsmechanismus angetrieben werden, der die flexible Welle (40) und die Antriebswelle (60) enthält, und wobei die Rotation der Abtriebswelle der Antriebsquelle (3) mittels des Rotationsübertragungsmechanismus auf die Betätigungseinheit (7) übertragen wird,
**dadurch gekennzeichnet, dass** eine Einwegkupplungsanordnung (8) enthaltend eine Wellenkupplung (80), eine Rohrkupplung (88) und ein Kugellager (98) bereitgestellt ist,
wobei die Wellenkupplung (80) einen Kupplungskörper (82), der zwischen der flexiblen Welle (40) und der Antriebswelle (60) positioniert ist, um diese miteinander zu kuppeln, wenn sie angetrieben werden, und eine zwischen dem Kupplungskörper (82) und der Antriebswelle (60) zwischengeschaltete Einwegkupplung (87) enthält, um die Erzeugung von Torsionsschwingungen in der Betätigungsstange (6) zu verhindern,
wobei die Rohrkupplung (88) außerhalb der Wellenkupplung (80) angeordnet ist und ein den flexiblen Schaft (40) bedeckendes flexibles Rohr (48) und ein die Antriebswelle (60) bedeckendes Hauptrohr (68) miteinander kuppelt, und
wobei das Kugellager (98) zwischen der Wellenkupplung (80) und der Rohrkupplung (88) zwischengeschaltet ist und einen Zwischenabschnitt des Kupplungskörpers (82) innerhalb der Rohrkupplung (88) stützt.

2. Rucksackähnlich tragbare Arbeitsmaschine (1) gemäß Anspruch 1, wobei die Rohrkupplung (88) als ein einziges Bauteil ausgebildet ist.

3. Rucksackähnlich tragbare Arbeitsmaschine (1) gemäß Anspruch 1, wobei das Kugellager (98) mindestens einen festen Abschnitt des Kupplungskörpers (82) zwischen einem Verbindungsabschnitt (84) an einer ersten Endseite, die mit der flexiblen Welle (40) verbunden ist, und einem Verbindungsabschnitt (86) an einer zweiten Endseite, die mit der Antriebswelle (60) verbunden ist, stützt.

4. Rucksackähnlich tragbare Arbeitsmaschine (1) gemäß Anspruch 1, wobei das Kugellager (98) mindestens einen Außenumfangsabschnitt des Verbindungsabschnitts (84) stützt, der mit der flexiblen Welle (40) in dem Kupplungskörper (82) verbunden ist.

5. Rucksackähnlich tragbare Arbeitsmaschine (1) gemäß Anspruch 1, wobei das Kugellager (98) eine Mehrzahl von nebeneinander in einer Mittelachsenrichtung (O) des Kupplungskörpers (82) angeordneten Kugellagern (98) enthält.

6. Rucksackähnlich tragbare Arbeitsmaschine (1) gemäß Anspruch 1, wobei der Kupplungskörper (82) der Wellenkupplung (80) mit einem inneren Umfangsabschnitt des Kugellagers (98) in Eingriff steht.

7. Rucksackähnlich tragbare Arbeitsmaschine (1) gemäß Anspruch 1,
wobei ein erster Endabschnitt (82R) des Kupplungskörpers (82) der Wellenkupplung (80) einen Durchmesser aufweist, der kleiner ist als ein Innendurchmesser des Kugellagers (98), und ein zweiter Endabschnitt (82F) des Kupplungskörpers (82) der Wellenkupplung (80) einen Durchmesser aufweist, der größer ist als der Innendurchmesser des Kugellagers (98), und
wobei ein abgestufter Abschnitt (85), ausgebildet, um mit einem inneren Umfangsabschnitt des Kugellagers (98) in Eingriff zu kommen, zwischen dem ersten Endabschnitt (82R) und dem zweiten Endabschnitt (82F) des Kupplungskörpers (82) der Wellenkupplung (80) gebildet ist.

8. Rucksackähnlich tragbare Arbeitsmaschine (1) gemäß Anspruch 1, wobei das Kugellager (98) und die Wellenkupplung (80) nur aus einer Richtung entlang einer Mittelachse (O) der Rohrkupplung (88) in die Rohrkupplung (88) eingeführt sind und innerhalb der Rohrkupplung (88) angeordnet sind.

9. Rucksackähnlich tragbare Arbeitsmaschine (1) gemäß Anspruch 1, wobei ein Griff (62) oder ein Handgriff (66), der von einem Anwender gehalten werden soll, näher an einem vorderen Ende bereitgestellt ist als die Wellenkupplung (80), die die Einwegkupplung (87) enthält.

## Revendications

1. Machine de travail motorisée de type sac à dos (1), comprenant :
un support de type sac à dos (2) configuré pour être porté sur le dos d'un opérateur ;
une source d'entraînement (3) montée sur le support de type sac à dos (2) ; et
une tige d'actionnement (6) dans laquelle est inséré un arbre d'entraînement (60), et pourvue au niveau de son extrémité avant d'une unité d'actionnement (7) entraînée par l'arbre d'entraînement (60), la tige d'actionnement (6) étant reliée à un arbre de sortie de la source d'entraînement (3) par l'intermédiaire d'un arbre flexible (40),
l'arbre de sortie de la source d'entraînement (3) et l'unité d'actionnement (7) étant configurés pour être couplés ensemble lorsqu'ils sont entraînés par un mécanisme de transmission de rotation comprenant l'arbre flexible (40) et l'arbre d'entraînement (60), et la rotation de l'arbre de sortie de la source d'entraînement (3) étant transmise à l'unité d'actionnement (7) par intermédiaire du mécanisme de transmission de rotation,
**caractérisée en ce que**
un ensemble d'embrayage unidirectionnel (8) comprenant un accouplement d'arbre (80), un accouplement de tuyau (88) et un roulement à billes (98) est prévu,
dans laquelle l'accouplement d'arbre (80) comprend un corps d'accouplement (82) positionné entre l'arbre flexible (40) et l'arbre d'entraînement (60) pour les accoupler lorsqu'ils sont entraînés, et un embrayage unidirectionnel (87) interposé entre le corps d'accouplement (82) et l'arbre d'entraînement (60) pour empêcher la génération de vibrations de torsion dans la tige d'actionnement (6),
dans laquelle l'accouplement de tuyau (88) est disposé à l'extérieur de l'accouplement d'arbre (80) et accouple ensemble un tube flexible (48) couvrant l'arbre flexible (40) et un tuyau principal (68) couvrant l'arbre d'entraînement (60), et
dans laquelle le roulement à billes (98) est interposé entre l'accouplement d'arbre (80) et l'accouplement de tuyau (88) et supporte une partie intermédiaire du corps d'accouplement (82) à l'intérieur de l'accouplement de tuyau (88).

2. Machine de travail motorisée de type sac à dos (1) selon la revendication 1, dans laquelle l'accouplement de tuyau (88) est configuré comme un composant unique.

3. Machine de travail motorisée de type sac à dos (1) selon la revendication 1, dans laquelle le roulement à billes (98) supporte au moins une partie solide du corps d'accouplement (82) entre une partie de liaison (84) sur un premier côté d'extrémité qui est reliée à l'arbre flexible (40) et une partie de liaison (86) sur un second côté d'extrémité qui est reliée à l'arbre d'entraînement (60).

4. Machine de travail motorisée de type sac à dos (1) selon la revendication 1, dans laquelle le roulement à billes (98) supporte au moins une partie périphérique extérieure de la partie de liaison (84) qui est reliée à l'arbre flexible (40) dans le corps d'accouplement (82).

5. Machine de travail motorisée de type sac à dos (1) selon la revendication 1, dans laquelle le roulement à billes (98) comprend une pluralité de roulements à billes (98) agencés côte à côte dans la direction de l'axe central (O) du corps d'accouplement (82).

6. Machine de travail motorisée de type sac à dos (1) selon la revendication 1, dans laquelle le corps d'accouplement (82) de l'accouplement d'arbre (80) est engagé avec une partie périphérique intérieure du roulement à billes (98).

7. Machine de travail motorisée de type sac à dos (1) selon la revendication 1,
dans laquelle une première partie d'extrémité (82R) du corps d'accouplement (82) de l'accouplement d'arbre (80) a un diamètre inférieur à un diamètre intérieur du roulement à billes (98), et une seconde partie d'extrémité (82F) du corps d'accouplement (82) de l'accouplement d'arbre (80) a un diamètre supérieur au diamètre intérieur du roulement à billes (98), et
dans laquelle une partie en gradins (85) configurée pour s'engager avec une partie périphérique intérieure du roulement à billes (98) est formée entre la première partie d'extrémité (82R) et la seconde partie d'extrémité (82F) du corps d'accouplement (82) de l'accouplement d'arbre (80).

8. Machine de travail motorisée de type sac à dos (1) selon la revendication 1, dans laquelle le roulement à billes (98) et l'accouplement d'arbre (80) sont insérés dans l'accouplement de tuyau (88) uniquement dans une direction le long d'un axe central (O) de l'accouplement de tuyau (88) et sont disposés à l'intérieur de l'accouplement de tuyau (88).

9. Machine de travail motorisée de type sac à dos (1) selon la revendication 1, dans laquelle un élément de préhension (62) ou une poignée (66) destinée à être tenu(e) par un opérateur est prévu(e) plus près d'une extrémité avant que ne l'est l'accouplement d'arbre (80) comprenant l'embrayage unidirectionnel (87).
